(19) **Europäisches Patentamt European Patent Office Office européen des brevets**

(11) **EP 4 746 227 A1**

(12) **EUROPEAN PATENT APPLICATION**

(43) Date of publication:
**20.05.2026 Bulletin 2026/21**

(21) Application number: **24213848.5**

(22) Date of filing: **19.11.2024**

(51) International Patent Classification (IPC):
**H02J 3/16** (2026.01)     **H02J 3/48** (2026.01)
**H02J 3/50** (2026.01)

(52) Cooperative Patent Classification (CPC):
**H02J 3/381; H02J 3/16; H02J 3/48; H02J 3/50;**
H02J 2101/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hitachi Energy Ltd
8050 Zürich (CH)**

(72) Inventors:
• **Hasler, Jean-Philippe
722 44 Västerås (SE)**
• **Heydari, Rasool
722 26 Västerås (SE)**
• **Danielsson, Christer
725 91 Västerås (SE)**
• **Sundar, Bharath Kumar
600001 Chennai (IN)**

(74) Representative: **AWA Sweden AB
Matrosgatan 1
Box 5117
200 71 Malmö (SE)**

(54) **A METHOD AND A DEVICE FOR CONTROLLING A VOLTAGE SOURCE CONVERTER**

(57)     A method (100) for controlling a voltage source converter, VSC, is provided. The method (100) comprises determining (102) a deviation in an active power and a deviation in a reactive power of the voltage source converter, VSC, based on an internal voltage source magnitude deviation, $\Delta U_{ivs}$, and an internal voltage source phase angle deviation, $\Delta \varphi_{ivs}$, of an internal voltage source of the VSC, a grid voltage magnitude deviation, $\Delta U_s$, and a grid voltage phase angle deviation, $\Delta \varphi_s$. The method (100) further comprises determining (104) a phase angle correction term and a magnitude correction term of an internal voltage source of the VSC based on the determined deviation in the active power and the determined deviation in the reactive power. The magnitude correction term is directly proportional to a difference between the internal voltage source phase angle deviation, $\Delta \varphi_{ivs}$, and the grid voltage phase angle deviation, $\Delta \varphi_s$. The phase angle correction term is directly proportional to a difference between the internal voltage source magnitude deviation, $\Delta U_{ivs}$, and the grid voltage magnitude deviation, $\Delta U_s$. Furthermore, the method (100) comprises adjusting (106) the internal voltage source of the VSC based on the phase angle correction term and the magnitude correction term.

Fig. 1

## Description

### Technical filed

The present invention generally relates to the field of Voltage source converters (VSCs). In particular, it relates to a method and a control device for controlling the Voltage source converters (VSCs).

### Background

In recent years, the power sector has undergone significant changes, particularly in power generation with integration of Inverter Based Resources (IBRs) such as photovoltaic (PV) and wind power. These developments have altered the operation of conventional power systems, presenting new challenges at the grid interface, particularly in voltage regulation and inertia support. Voltage source converters (VSCs) have become crucial in maintaining grid voltage, supporting frequency stability and enhancing overall grid stability, especially in weak grids with high penetration of renewables connected via long transmission lines to distant areas.

VSCs, through Grid Forming Control (GFM) strategies, have evolved from simply providing basic reactive power support to actively shaping grid voltage and responding to variations in grid voltage phase angle and frequency. This capability is critical, especially during conditions of extremely low short-circuit power, such as during grid restoration.

Despite these advancements, the transition to IBRs has introduced significant complexities. One of the primary challenges is the management of both active power (P) and reactive power (Q), particularly due to their strong coupling in VSC systems. In conventional systems, the voltage angle and magnitude directly influence the transfer of active and reactive power. However, this coupling makes it difficult to control P and Q independently, especially during transient states, which can adversely affect system dynamics. In weak grid conditions, this coupled P and Q interaction can lead to instability in grid voltage, further complicating the operation of power converters.

To address these challenges, it is essential to decouple P and Q in VSC systems, allowing for independent regulation of voltage irrespective of active power flow. This decoupling is crucial for managing voltage fluctuations and maintaining system stability, especially in the context of increasing renewable energy penetration. However, achieving effective decoupling is complex, particularly given the inherent coupling of P and Q channels in converters, highlighting the need for innovative solutions in this area.

### Summary

Thus, it would be advantageous to achieve an arrangement that overcomes, or at least alleviates, the above-mentioned drawbacks. In particular, it would be desirable to improve the stability of energy/power systems by maintaining grid voltage, supporting frequency stability and enhancing overall grid stability, especially in weak grids with high penetration of renewables connected via long transmission lines to distant areas. This can be achieved by employing a method and a control device for controlling a voltage source converter. To better address one or more of these concerns, a method and a control device for controlling a voltage source converter, having the features defined in the independent claim is provided. Preferable embodiments are defined in the dependent claims.

Hence, according to a first aspect, a method for controlling a voltage source converter, VSC, is provided. The method comprises determining a deviation in an active power and a deviation in a reactive power of the voltage source converter, VSC, based on an internal voltage source magnitude deviation, $\Delta U_{ivs}$, and an internal voltage source phase angle deviation, $\Delta\varphi_{ivs}$, of an internal voltage source of the VSC, a grid voltage magnitude deviation, $\Delta Us$, and a grid voltage phase angle deviation, $\Delta\varphi_s$. The method further comprises determining a phase angle correction term and a magnitude correction term of an internal voltage source of the VSC based on the determined deviation in the active power and the determined deviation in the reactive power. The magnitude correction term is directly proportional to a difference between the internal voltage source phase angle deviation, $\Delta\varphi_{ivs}$, and the grid voltage phase angle deviation, $\Delta\varphi_s$. The phase angle correction term is directly proportional to a difference between the internal voltage source magnitude deviation, $\Delta U_{ivs}$, and the grid voltage magnitude deviation, $\Delta Us$. Furthermore, the method comprises adjusting the internal voltage source of the VSC based on the phase angle correction term and the magnitude correction term.

The control device and the method for controlling a voltage source converter, VSC, is designed to enhance the stability and efficiency of the energy/power system by adjusting the internal voltage of the VSC. The internal voltage source of the VSC is adjusted if any deviation in an active power and deviation in a reactive power is determined. The step of determining the deviation in the active power and the deviation in the reactive power results in decoupling the active power and the reactive power. The decoupling of the active power and the reactive power helps in controlling the active power, P, and the reactive power, Q, independently. As stated earlier, the decoupling the active power, P, and the reactive power, Q, is crucial for managing voltage fluctuations and maintaining system stability, especially in the context of increasing renewable energy penetration.

An advantage associated with the present disclosure is that determining the deviation in the active power and the deviation in the reactive power of the voltage source converter, VSC, results in decoupling the active power and the reactive power, thereby allowing for independent regulation of voltage of the VSC. This decoupling of the active power, P, and the reactive power, Q, may help in better managing voltage fluctuations and maintaining system stability, especially with increasing renewable energy penetration.

The grid voltage magnitude deviation, $\Delta U_s$, and the grid voltage phase angle deviation, $\Delta\varphi_s$, are parameters obtained from any point on grid of which the VSC is a part or is configured to be connected.

The step of adjusting the internal voltage source of the VSC, may comprise adjusting at least one of the phase angle and the magnitude of the internal voltage source of the VSC.

The operations of the method may be performed in low frequency operation of the VSC.

The operations may comprise at least one of the following method steps, determining the deviation in the active power and the deviation in the reactive power, determining the phase angle correction term and the magnitude correction term, and adjusting the internal voltage source of the VSC.

The grid voltage magnitude deviation, $\Delta U_s$, and the grid voltage phase angle deviation, $\Delta\varphi_s$, may be determined at a point of common coupling, PCC, in a grid.

The at least one of the grid voltage magnitude deviation, $\Delta U_s$, and the grid voltage phase angle deviation, $\Delta\varphi_s$, may be received via a remote bus.

The grid voltage phase angle deviation, $\Delta\varphi_s$, may incorporate the impedance between the PCC and the remote bus.

The magnitude correction term and the phase angle correction term may be proportional to a first decoupling gain, $K_{Qdec}$, and a second decoupling gain, $K_{Pdec}$, respectively.

The deviation in the active power and the deviation in a reactive power of the voltage source converter, VSC, may be expressed as,

$$\begin{bmatrix} d\boldsymbol{P} \\ d\boldsymbol{Q} \end{bmatrix} = \begin{bmatrix} k_{Gv} & -k_{Bv} \\ -k_{Bv} & -k_{Gv} \end{bmatrix} \begin{bmatrix} \Delta U_s \\ \Delta\varphi_s \end{bmatrix} - \begin{bmatrix} k_{Gv} & -k_{Bv} \\ -k_{Bv} & -k_{Gv} \end{bmatrix} \begin{bmatrix} \Delta U_{IVS} \\ \Delta\varphi_{IVS} \end{bmatrix} = \begin{bmatrix} k_{Gv} & -k_{Bv} \\ -k_{Bv} & -k_{Gv} \end{bmatrix} \begin{bmatrix} \Delta U_s - \Delta U_{IVS} \\ \Delta\varphi_s - \Delta\varphi_{IVS} \end{bmatrix}$$

where $k_{Gv}$ and $k_{Bv}$ are factors proportional to a voltage source converter admittance $Y = G + jB$, where G is a conductance and B is a susceptance at nominal voltage of the voltage source converter VSC.

In scenarios, when the at least one of the grid voltage magnitude deviation, $\Delta Us$, and the grid voltage phase angle deviation, $\Delta\varphi_s$, are received via a remote bus, kGv and kBv are factors proportional to a voltage source converter admittance $Y = G + jB$ and in addition an admittance between PCC and the remote bus.

The operation of determining a phase angle correction term and a magnitude correction term of an internal voltage source of the VSC may comprise equating the deviation in the active power and the deviation in a reactive power to zero, expressed as,

$$dQ = 0 = - k_{Bv}\Delta U_s - k_{Gv}\Delta\Phi_s + k_{Bv}\Delta U_{IVS} + k_{Gv}\Delta\Phi_{IVS}$$

$$dP = 0 = k_{Gv}\Delta U_s - k_{Bv}\Delta\Phi_s - k_{Gv}\Delta U_{IVS} + k_{Bv}\Delta\Phi_{IVS} .$$

The phase angle correction term and the magnitude correction term may be expressed as,

$$\text{Phase angle correction term} = k_{Pdec} \text{ X } k_{Gv}/k_{Bv} (\Delta U_s - \Delta U_{IVS}) \text{ X LPF}(s)$$

$$\text{Magnitude correction term} = k_{Qdec} \text{ X } k_{Gv}/k_{Bv} (\Delta\Phi_s - \Delta\Phi_{IVS}) \text{ X LPF}(s)$$

where the first decoupling gain $K_{Pdec}$, and the second decoupling gain $K_{Qdec}$ have compensation values ranging from 0 to 1 and LPF is a low pass filter.

The active power control and the reactive power control of the voltage source converter, VSC, may operate with a specific bandwidth. The LPF bandwidth may be equal to or lower than a bandwidth of the active power control and the reactive power control to satisfy control stability.

As an example, the bandwidth of the active power control may be between 0.1 Hz (for inertia support) up to 25 Hz (no inertia support, STATCOM operation). The Reactive Power Control (Reactive Power Control or Reactive Power based on voltage deviation) bandwidth may be between 1 Hz up to 30 Hz.

According to a second aspect, a control device for controlling a voltage source converter, VSC, is provided. The control device comprises, a unit for determining a deviation in an active power and a deviation in a reactive power of the voltage source converter, VSC, based on an internal voltage source magnitude deviation, $\Delta U_{ivs}$, an internal voltage source phase angle deviation, $\Delta\varphi_{ivs}$, of an internal voltage source of the VSC, a grid voltage magnitude deviation, $\Delta Us$, and a grid voltage phase angle deviation, $\Delta\varphi_s$. The unit is further configured to determine a phase angle correction term and a magnitude correction term of an internal voltage source of the VSC based on the determined deviation in the active power and the determined deviation in the reactive power. The magnitude correction term is directly proportional to a difference between the internal voltage source phase angle deviation, $\Delta\varphi_{ivs}$, and the grid voltage phase angle deviation, $\Delta\varphi s$. The phase angle correction term is directly proportional to a difference between the internal voltage source magnitude deviation, $\Delta U_{ivs}$, and the grid voltage magnitude deviation, $\Delta Us$. The control device further comprises a correction unit for adjusting the internal voltage source of the VSC based on the phase angle correction term and the magnitude correction term.

The unit may comprise at least one low pass filter, LPF. The LPF may be configured to determine the deviation in the active power and the reactive power to be performed in low frequency operation of the VSC.

The grid voltage magnitude deviation, $\Delta U_s$, and the grid voltage phase angle deviation, $\Delta\varphi s$, may be determined at a point of common coupling, PCC, in a grid.

The grid voltage magnitude deviation, $\Delta U_s$, and the grid voltage phase angle deviation, $\Delta\varphi_s$, may be received via a remote bus.

The unit may be configured to determine the magnitude correction term and the phase angle correction term proportional to a first decoupling gain, $K_{Qdec}$, and a second decoupling gain, $K_{Pdec}$, respectively.

**Brief description of the drawings**

These and other aspects will now be described in more detail with reference to the appended drawings showing embodiments.

Figure 1 is a flowchart representing a method for controlling a voltage source converter, VSC;

Figure 2 schematically illustrates an embodiment of a control device for controlling a voltage source converter, VSC;

Figure 3 schematically illustrating a control flow representing a method for controlling a voltage source converter, VSC.

All the figures are schematic, not necessarily to scale, and generally only show parts which are necessary in order to elucidate the embodiments, wherein other parts may be omitted or merely suggested. Like reference numerals refer to like elements throughout the description.

**Detailed description**

The present aspects will now be described more fully hereinafter with reference to the accompanying drawings, in which currently preferred embodiments are shown. These aspects may, however, be embodied in many different forms and should not be construed as limited to the embodiments set forth herein; rather, these embodiments are provided for thoroughness and completeness, and fully convey the scope of the present aspects to those skilled in art.

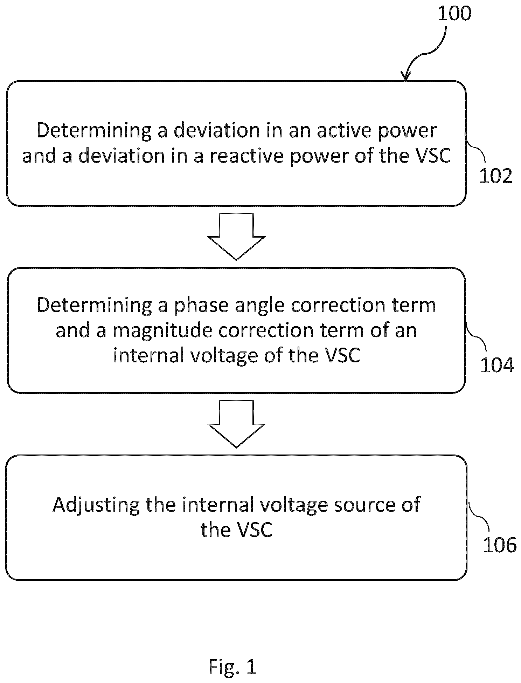

Referring to figure 1, according to an embodiment thereof a flowchart representing a method 100 for controlling a voltage source converter, VSC, is shown. The method 100 comprises determining 102 a deviation in an active power and a deviation in a reactive power of the voltage source converter, VSC, based on an internal voltage source magnitude deviation, $\Delta U_{ivs}$, and an internal voltage source phase angle deviation, $\Delta\varphi_{ivs}$, of an internal voltage source of the VSC, a grid voltage magnitude deviation, $\Delta U_s$, and a grid voltage phase angle deviation, $\Delta\varphi_s$. The method 100 further comprises determining 104 a phase angle correction term and a magnitude correction term of an internal voltage source of the VSC based on the determined deviation in the active power and the determined deviation in the reactive power. The magnitude correction term is directly proportional to a difference between the internal voltage source phase angle deviation, $\Delta\varphi_{ivs}$, and the grid voltage phase angle deviation, $\Delta\varphi_s$. The phase angle correction term is directly proportional to a difference between the internal voltage source magnitude deviation, $\Delta U_{ivs}$, and the grid voltage magnitude deviation, $\Delta Us$. Furthermore, the method 100 comprises adjusting 106 the internal voltage source of the VSC based on the phase angle correction term and the magnitude correction term.

The operations of the method for controlling the voltage source converter may be performed in low frequency operation of the VSC.

The internal voltage source magnitude deviation, $\Delta Uivs$, and an internal voltage source phase angle deviation, $\Delta\varphi ivs$, of an internal voltage source of the VSC may be determined by the active power control and the reactive power control. The grid voltage magnitude deviation, $\Delta U_s$, and the grid voltage phase angle deviation, $\Delta\varphi_s$, may be determined at a point of common coupling, PCC, in a grid. Alternatively, the grid voltage magnitude deviation, $\Delta U_s$, and the grid voltage phase angle deviation, $\Delta\varphi_s$, may be received via a remote bus.

The deviation in the active power and the deviation in a reactive power of the voltage source converter, VSC, here denoted dP and dQ, respectively, may be expressed as,

$$\begin{bmatrix} d\boldsymbol{P} \\ d\boldsymbol{Q} \end{bmatrix} = \begin{bmatrix} k_{Gv} & -k_{Bv} \\ -k_{Bv} & -k_{Gv} \end{bmatrix} \begin{bmatrix} \Delta U_s \\ \Delta\varphi_s \end{bmatrix} - \begin{bmatrix} k_{Gv} & -k_{Bv} \\ -k_{Bv} & -k_{Gv} \end{bmatrix} \begin{bmatrix} \Delta U_{IVS} \\ \Delta\varphi_{IVS} \end{bmatrix} = \begin{bmatrix} k_{Gv} & -k_{Bv} \\ -k_{Bv} & -k_{Gv} \end{bmatrix} \begin{bmatrix} \Delta U_s - \Delta U_{IVS} \\ \Delta\varphi_s - \Delta\varphi_{IVS} \end{bmatrix}$$

where, $k_{Gv}$ and $k_{Bv}$ are factors proportional to a voltage source converter admittance $Y = G + jB$, where G is a conductance and B is a susceptance at nominal voltage of the voltage source converter, VSC.

The operation of determining a phase angle correction term and a magnitude correction term of an internal voltage source of the VSC may comprise equating the deviation in the active power and the deviation in a reactive power to zero, expressed as,

$$dQ = 0 = - k_{Bv}\Delta U_s - k_{Gv}\Delta\Phi_s + k_{Bv}\Delta U_{IVS} + k_{Gv}\Delta\Phi_{IVS}$$

$$dP = 0 = k_{Gv}\Delta U_s - k_{Bv}\Delta\Phi_s - k_{Gv}\Delta U_{IVS} + k_{Bv}\Delta\Phi_{IVS}.$$

The phase angle correction term and the magnitude correction term may be expressed as,

$$\text{Phase angle correction term} = k_{Pdec} \times k_{Gv}/k_{Bv} \ (\Delta U_s - \Delta U_{IVS}) \times LPF(s)$$

$$\text{Magnitude correction term} = k_{Qdec} \times k_{Gv}/k_{Bv} \ (\Delta\Phi_s - \Delta\Phi_{IVS}) \times LPF(s)$$

where the first decoupling gain $K_{Pdec}$, and the second decoupling gain $K_{Qdec}$, have compensation values ranging from 0 to 1 and LPF is a low pass filter.

The magnitude correction term and the phase angle correction term may be proportional to a first decoupling gain, $K_{Qdec}$, and a second decoupling gain, $K_{Pdec}$, respectively.

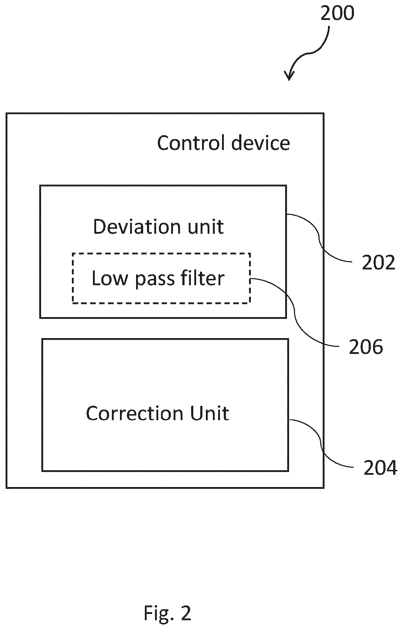

According to an embodiment of a control device 200, as shown in figure 2, for controlling a voltage source converter, VSC, the control device 200 comprises a unit 202 for determining a deviation in an active power and a deviation in a reactive power of the voltage source converter, VSC, based on an internal voltage source magnitude deviation, $\Delta U_{ivs}$, an internal voltage source phase angle deviation, $\Delta\varphi_{ivs}$, of an internal voltage source of the VSC, a grid voltage magnitude deviation, $\Delta U_s$, and a grid voltage phase angle deviation, $\Delta\varphi_s$. The unit 202 is further configured to determine a phase angle correction term and a magnitude correction term of an internal voltage source of the VSC based on the determined deviation in the active power and the determined deviation in the reactive power. The magnitude correction term is directly proportional to a difference between the internal voltage source phase angle deviation, $\Delta\varphi_{ivs}$, and the grid voltage phase angle deviation, $\Delta\varphi_s$. The phase angle correction term is directly proportional to a difference between the internal voltage source magnitude deviation, $\Delta U_{ivs}$, and the grid voltage magnitude deviation, $\Delta U_s$. The control device 200 further comprises a correction unit 204 for adjusting the internal voltage source of the VSC based on the phase angle correction term and the magnitude correction term.

The unit 202 may comprise at least one low pass filter, LPF, 206. The LPF 206 may be configured to determine the deviation in the active power and the reactive power to be performed in low frequency operation of the VSC.

The unit 202 may be configured to determine the magnitude correction term and the phase angle correction term proportional to a first decoupling gain, $K_{Qdec}$, and a second decoupling gain, $K_{Pdec}$, respectively.

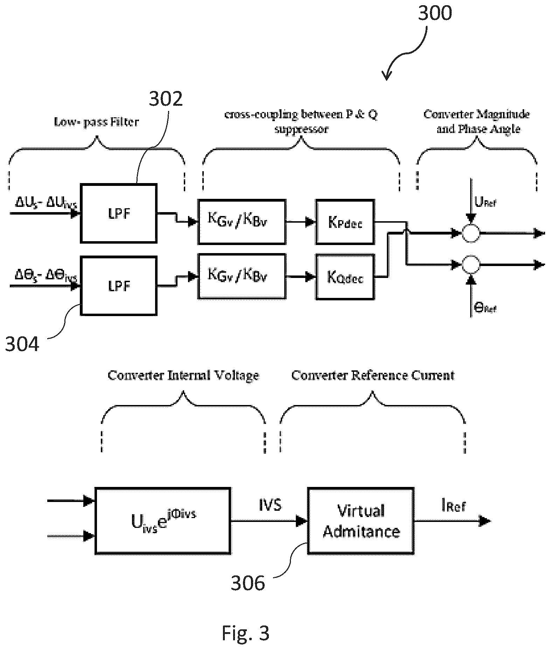

Referring to figure 3, according to an embodiment thereof a block diagram of a control flow representing a part of the method 300 for controlling a voltage source converter, VSC, is shown. Figure 3 represents two LPFs 302, 304 respectively receiving the difference between the grid voltage magnitude deviation, $\Delta U_s$, and the internal voltage source magnitude deviation, $\Delta U_{ivs}$, and the difference between the grid voltage phase angle deviation, $\Delta\varphi_s$, and the internal voltage source phase angle deviation, $\Delta\varphi_{ivs}$. An output of the first LPF 302 is multiplied with the ratio ($k_{Gv}/k_{Bv}$) of factors proportional to a voltage source converter admittance $Y = G + jB$, and with the first decoupling gain, $K_{Pdec}$. An output of the second LPF 304 is multiplied with the ratio ($k_{Gv}/k_{Bv}$) of factors proportional to a voltage source converter admittance $Y = G + jB$, and the second decoupling gain, $K_{Qdec}$. G is a conductance and B is a susceptance at nominal voltage of the voltage source converter, VSC. The multiplied output of the first LPF 302 is compared with a reference phase angle, $\varphi_{Ref}$, of the VSC to determine a phase angle correction term. The multiplied output of the second LPF is compared with a reference magnitude $U_{Ref}$ of the VSC to determine a magnitude correction term. Based on the determined phase angle correction term and the determined magnitude correction term, the internal voltage of the VSC is adjusted. The adjustment of the internal voltage of the VSC results in adjustment of an internal reference current $I_{Ref}$ of the VSC, as shown in the figure at the output of the virtual admittance block 306.

While the present disclosure has been illustrated and described in detail in the drawings and foregoing description, such illustration and description are to be considered illustrative or exemplary and not restrictive.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain features are recited in mutually different dependent claims does not indicate that a combination of these features cannot be used to advantage. Any reference signs in the claims should not be construed as limiting the scope.

**Claims**

1. A method (100) for controlling a voltage source converter comprising:

   determining (102) a deviation in an active power and a deviation in a reactive power of the voltage source converter, VSC, based on an internal voltage source magnitude deviation, $\Delta U_{ivs}$, and an internal voltage source phase angle deviation, $\Delta\varphi_{ivs}$, of an internal voltage source of the VSC, a grid voltage magnitude deviation, $\Delta U_s$, and a grid voltage phase angle deviation, $\Delta\varphi_s$;
   determining (104) a phase angle correction term and a magnitude correction term of an internal voltage source of the VSC based on the determined deviation in the active power and the determined deviation in the reactive power,
   wherein the magnitude correction term is directly proportional to a difference between the internal voltage source phase angle deviation, $\Delta\varphi_{ivs}$, and the grid voltage phase angle deviation, $\Delta\varphi_s$, and the phase angle correction term is directly proportional to a difference between the internal voltage source magnitude deviation, $\Delta U_{ivs}$, and the grid voltage magnitude deviation, $\Delta U_s$; and
   adjusting (106) the internal voltage source of the VSC based on the phase angle correction term and the magnitude correction term.

2. The method for controlling a voltage source converter according to claim 1, wherein the operations are performed in low frequency operation of the VSC.

3. The method for controlling a voltage source converter according to any one of claims 1 and 2, wherein the grid voltage magnitude deviation, $\Delta U_s$, and the grid voltage phase angle deviation, $\Delta\varphi_s$, are determined at a point of common coupling, PCC, in a grid.

4. The method for controlling a voltage source converter according to any one of claims 1 and 2, wherein at least one of the grid voltage magnitude deviation, $\Delta U_s$, and the grid voltage phase angle deviation, $\Delta\varphi_s$, are received via a remote bus.

5. The method for controlling a voltage source converter according to any one of claims 1 to 4, wherein the magnitude correction term and the phase angle correction term are proportional to a first decoupling gain, $K_{Qdec}$, and a second decoupling gain, $K_{Pdec}$, respectively.

6. The method for controlling a voltage source converter according to any one of claims 1 to 5, wherein the deviation in the active power and the deviation in a reactive power of the voltage source converter, VSC, is expressed as:

$$\begin{bmatrix} d\boldsymbol{P} \\ d\boldsymbol{Q} \end{bmatrix} = \begin{bmatrix} k_{Gv} & -k_{Bv} \\ -k_{Bv} & -k_{Gv} \end{bmatrix} \begin{bmatrix} \Delta U_s \\ \Delta\varphi_s \end{bmatrix} - \begin{bmatrix} k_{Gv} & -k_{Bv} \\ -k_{Bv} & -k_{Gv} \end{bmatrix} \begin{bmatrix} \Delta U_{IVS} \\ \Delta\varphi_{IVS} \end{bmatrix} = \begin{bmatrix} k_{Gv} & -k_{Bv} \\ -k_{Bv} & -k_{Gv} \end{bmatrix} \begin{bmatrix} \Delta U_s - \Delta U_{IVS} \\ \Delta\varphi_s - \Delta\varphi_{IVS} \end{bmatrix}$$

   where $k_{Gv}$ and $k_{Bv}$ are factors proportional to a voltage source converter admittance $Y = G + jB$, where G is a conductance and B is a susceptance at nominal voltage of the voltage source converter, VSC.

7. The method for controlling a voltage source converter according to claim 6, wherein the operation of determining a phase angle correction term and a magnitude correction term of an internal voltage source of the VSC comprises equating the deviation in the active power and the deviation in a reactive power to zero, expressed as:

$$dQ = 0 = - k_{Bv}\Delta U_s - k_{Gv}\Delta \Phi_s + k_{Bv}\Delta U_{IVS} + k_{Gv}\Delta \Phi_{IVS}$$

$$dP = 0 = k_{Gv}\Delta U_s - k_{Bv}\Delta \Phi_s - k_{Gv}\Delta U_{IVS} + k_{Bv}\Delta \Phi_{IVS}$$

.

8. The method for controlling a voltage source converter according to any one of claims 6 and 7, wherein the phase angle correction term and the magnitude correction term are expressed as:

$$\text{phase angle correction term} = k_{Pdec} \times k_{Gv}/k_{Bv} (\Delta U_S - \Delta U_{IVS}) \times LPF(s)$$

$$\text{magnitude correction term} = k_{Qdec} \times k_{Gv}/k_{Bv} (\Delta \Phi_s - \Delta \Phi_{IVS}) \times LPF(s)$$

where the first decoupling gain, $K_{Pdec}$, and the second decoupling gain, $K_{Qdec}$, have compensation values ranging from 0 to 1 and LPF is a low pass filter.

9. A control device (200) for controlling a voltage source converter comprising:

a unit (202) for determining a deviation in an active power and a deviation in a reactive power of the voltage source converter, VSC, based on an internal voltage source magnitude deviation, $\Delta U_{ivs}$, an internal voltage source phase angle deviation, $\Delta\varphi_{ivs}$, of an internal voltage source of the VSC, a grid voltage magnitude deviation, $\Delta Us$, and a grid voltage phase angle deviation, $\Delta\varphi_s$;
wherein the unit is further configured to determine a phase angle correction term and a magnitude correction term of an internal voltage source of the VSC based on the determined deviation in the active power and the determined deviation in the reactive power,
wherein the magnitude correction term is directly proportional to a difference between the internal voltage source phase angle deviation, $\Delta\varphi_{ivs}$, and the grid voltage phase angle deviation, $\Delta\varphi_s$, and
the phase angle correction term is directly proportional to a difference between the internal voltage source magnitude deviation, $\Delta Uivs$, and the grid voltage magnitude deviation, $\Delta U_s$; and
a correction unit (204) for adjusting the internal voltage source of the VSC based on the phase angle correction term and the magnitude correction term.

10. The control device for controlling a voltage source converter according to claim 9, wherein the unit comprises at least one low pass filter, LPF, (206) configured to determine the deviation in the active power and the reactive power to be performed in low frequency operation of the VSC.

11. The control device for controlling a voltage source converter according to any one of claims 9 and 10, wherein the grid voltage magnitude deviation, $\Delta U_s$, and the grid voltage phase angle deviation, $\Delta\varphi_s$, are determined at a point of common coupling, PCC, in a grid.

12. The control device for controlling a voltage source converter according to any one of claims 9 to 11, wherein the grid voltage magnitude deviation, $\Delta U_s$, and the grid voltage phase angle deviation, $\Delta\varphi_s$, are received via a remote bus.

13. The control device for controlling a voltage source converter according to any one of claims 9 to 12, wherein the unit is configured to determine the magnitude correction term and the phase angle correction term proportional to a first decoupling gain, $K_{Qdec}$, and a second decoupling gain, $K_{Pdec}$, respectively.

100

Determining a deviation in an active power
and a deviation in a reactive power of the VSC

102

Determining a phase angle correction term
and a magnitude correction term of an
internal voltage of the VSC

104

Adjusting the internal voltage source of
the VSC

106

Fig. 1

200

Fig. 2

300

302

304

306

Low- pass Filter

cross-coupling between P & Q
suppressor

Converter Magnitude
and Phase Angle

$\Delta U_s - \Delta U_{ivs}$ → LPF → $K_{Gv}/K_{Bv}$ → $K_{Pdec}$

$\Delta\Theta_s - \Delta\Theta_{ivs}$ → LPF → $K_{Gv}/K_{Bv}$ → $K_{Qdec}$

$U_{Ref}$

$\Theta_{Ref}$

Converter Internal Voltage

Converter Reference Current

$U_{ivs}e^{j\Phi_{ivs}}$ → IVS → Virtual Admitance → $I_{Ref}$

Fig. 3

**EUROPEAN SEARCH REPORT**

Application Number

EP 24 21 3848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 790 312 A2 (GEN ELECTRIC [US]) 15 October 2014 (2014-10-15) | 1-5,9-13 | INV. H02J3/16 |
| A | * abstract * | 6-8 | H02J3/48 |
| | * figures * | | H02J3/50 |
| | ----- | | |
| A | WANG XIONGFEI ET AL: "Grid-Synchronization Stability of Converter-Based Resources-An Overview", IEEE OPEN JOURNAL OF INDUSTRY APPLICATIONS, IEEE, vol. 1, 31 August 2020 (2020-08-31), pages 115-134, XP011810684, DOI: 10.1109/OJIA.2020.3020392 [retrieved on 2020-09-23] * abstract * * figures 1-3 * | 1-13 | |
| | ----- | | |
| A | CN 116 054 202 A (ECONOMIC AND TECH RESEARCH INSTITUTE STATE GRID ZHEJIANG ELECTRIC POWE) 2 May 2023 (2023-05-02) * abstract * * figures 1-4 * | 1-13 | |
| | ----- | | TECHNICAL FIELDS SEARCHED (IPC) |
| A | CN 118 539 488 A (INNER MONGOLIA ELECTRIC POWER ECONOMIC TECH RESEARCH INSTITUTE BRANCH) 23 August 2024 (2024-08-23) * abstract * * figure 2 * | 1-13 | H02J |
| | ----- | | |

The present search report has been drawn up for all claims

| Place of search | Date of completion of the search | Examiner |
|---|---|---|
| Munich | 16 May 2025 | Hurtado-Albir, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 3848

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | Publication date | Patent family member(s) | | Publication date |
|---|---|---|---|---|---|
| EP 2790312 | A2 | 15-10-2014 | CA | 2848107 A1 | 11-10-2014 |
| | | | CN | 104104221 A | 15-10-2014 |
| | | | EP | 2790312 A2 | 15-10-2014 |
| | | | US | 2014307494 A1 | 16-10-2014 |
| CN 116054202 | A | 02-05-2023 | NONE | | |
| CN 118539488 | A | 23-08-2024 | NONE | | |

EPO FORM P0459

For more details about this annex : see Official Journal of the European Patent Office, No. 12/82